# EUROPEAN PATENT APPLICATION

(11) **EP 4 521 252 A1**
(43) Date of publication of application: **12.03.2025**
(21) Application number: 23867418.8
(22) Date of filing: 15.09.2023
(51) Int. Cl.: G06F 9/54

(54) **DATA ACCESS METHOD, ELECTRONIC DEVICE, AND COMPUTER READABLE STORAGE MEDIUM**

(30) Priority: 20.09.2022 CN 202211145801
(71) Applicant: Huawei Technologies Co., Ltd., Shenzhen, Guangdong 518129 (CN)
(72) Inventor: QIAN, Jiaxing, Shenzhen, Guangdong 518129 (CN); PAN, Qinxu, Shenzhen, Guangdong 518129 (CN); MAO, Jingjing, Shenzhen, Guangdong 518129 (CN); NING, Zuobin, Shenzhen, Guangdong 518129 (CN); CHEN, Jinglong, Shenzhen, Guangdong 518129 (CN)
(74) Representative: Epping - Hermann - Fischer
(86) International application number: PCT/CN2023/119142
(87) International publication number: WO 2024/061129

(57) **Abstract**

This application relates to the field of computer technologies, and specifically, to a data access method, an electronic device, and a computer-readable storage medium. The electronic device includes a first electronic device, and the first electronic device includes a first application, a second application, and a third application. The method includes: The third application detects an access request for accessing first storage space of the first application, where the first storage space has a first access path. The third application establishes, in response to the access request, a second access path that has a mapping relationship with the first access path. The third application sends the second access path to the second application. The second application accesses the first storage space of the first application by using the second access path. **In** the solutions of this application, a data processing amount and occupied storage resources corresponding to data access performed by the electronic device in a data transmission scenario like data cloning or data backup can be reduced, thereby helping reduce system power consumption.

## Description

This application claims priority to Chinese Patent Application No. 202211145801.8, filed with the China National Intellectual Property Administration on September 20, 2022 and entitled "DATA ACCESS METHOD, ELECTRONIC DEVICE, AND COMPUTER-READABLE STORAGE MEDIUM", which is incorporated herein by reference in its entirety.

### TECHNICAL FIELD

This application relates to the field of computer technologies, and specifically, to a data access method, an electronic device, and a computer-readable storage medium.

### BACKGROUND

With rapid development of the science and technology, more types of intelligent terminal electronic devices are applied to life of people. For example, these electronic devices may include mobile phones, tablets, computers, vehicle-mounted devices, smart home appliances, fitness devices, televisions, large screens, and the like based on classification of device types. Different electronic devices may be applied to fields such as office work, home living, sports, travel, education, and the like based on different application scenarios. Data stored on different electronic devices is also continuously updated in a use procedure. Therefore, to provide a good use experience, data transmission procedures such as data cloning, data backup, and data recovery usually need to be performed between electronic devices, to implement information synchronization between intelligent terminal devices specified by a user.

For example, when a user replaces an old device or purchases a new device, the user needs to transmit data (for example, application data, pictures, or files) in the old device to the new device, to implement information synchronization between the new device and the old device.

However, currently, in an operating system installed on each intelligent terminal, different applications and a backup service provided by the system run in respective processes. Due to a security requirement, data in storage space that is correspondingly allocated to each process is isolated by using a sandbox mechanism. Therefore, over data transmission, a data backup procedure, a data recovery procedure, and the like all need to rely on inter-process communication (InterProcess Communication, IPC) to implement cross-process data copy (copy) for a plurality of times. In this way, a procedure of copying a large amount of data brings a great challenge to data processing performance of the electronic device. In addition, the procedure of copying a large amount of data also occupies many internal memory resources on old and new electronic devices, and causes increased system power consumption.

### SUMMARY

In view of this, embodiments of this application provide a data access method, an electronic device, and a computer-readable storage medium, to help reduce a data processing amount and occupied storage resource corresponding to data access performed by an electronic device in a data transmission scenario like data cloning or data backups, thereby helping reduce system power consumption.

According to a first aspect, an embodiment of this application provides a data access method, applied to a first electronic device, where the first electronic device includes a first application, a second application, and a third application. The method includes: The third application detects an access request for accessing first storage space of the first application, where the first storage space has a first access path. The third application establishes, in response to the access request, a second access path that has a mapping relationship with the first access path. The third application sends the second access path to the second application. The second application accesses the first storage space of the first application by using the second access path.

That is, the third application having a global transaction processing capability may obtain, for the second application, the second access path used to access the first storage space corresponding to the first application. The second access path may be obtained by the third application in a mapping manner. For example, a mapping relationship is established between the second access path and the first access path of the first storage space. Further, the third application may share the obtained second storage path with the second application in a specific manner. A specific procedure in which the third application shares the second access path with the second application is specifically described below. Details are not described herein again.

In a data transmission scenario, on a sending device side, the first application may be, for example, a third-party application or a system application for providing to-be-transmitted application data, and the second application may be, for example, a data transmission application for sending to-be-transmitted data to a receiving device side, for example, a clone application or a backup and recovery application. On the receiving device side, the first application may be, for example, a third-party application that waits to obtain the to-be-transmitted application data for installation or running, or a system application that waits to obtain the to-be-transmitted application data for running, and the second application may be, for example, a data transmission application for receiving the to-be-transmitted data from the sending device side. The data transmission application may further write the received data into storage space corresponding to the first application on the receiving device side. The data transmission application may be, for example, a clone application or a backup and recovery application. The third application may be, for example, a backup service provided by a system of a sending device, or a backup service provided by a system of a receiving device.

In a possible implementation of the first aspect, the first electronic device is a sending device, and the first electronic device establishes, by running the second application, a communication connection to a second electronic device serving as a receiving device. The method further includes: The second application sends first data that is read by accessing the first storage space to the second electronic device.

That is, when the first electronic device is the sending device in the data transmission scenario, the method provided in the first aspect may further include: sending the first data that is read by accessing the first storage space to the receiving device, namely, the second electronic device. The first data may be, for example, application data corresponding to the first application installed on the sending device side.

In a possible implementation of the first aspect, the first electronic device is a receiving device, and the first electronic device establishes, by running the second application, a communication connection to a third electronic device serving as a sending device. In addition, the method further includes: The second application writes second data that is received from the third electronic device into the accessed first storage space.

That is, when the first electronic device is the receiving device in the data transmission scenario, the method provided in the first aspect may further include: writing the second data that is received from the sending device into the first storage space corresponding to the first application on the receiving device side, where the sending device is the third electronic device. The second data may be, for example, application data corresponding to the first application to be installed or installed on the receiving device side.

In a possible implementation of the first aspect, application data of the first application and application data of the second application are isolated from each other.

It may be understood that, based on an isolation mechanism used by some operating systems, application data of different applications is isolated from each other, and only some system applications or system services that have a global transaction processing capability may process a global transaction by using a global transaction identifier of the system. For example, a backup service may establish, by using an application launch service of a system, a directory mapping relationship between the backup service and storage space corresponding to a third-party application. The directory mapping relationship may be, for example, the mapping relationship between the first access path and the second access path.

**In** a possible implementation of the first aspect, that the third application detects an access request for accessing first storage space of the first application includes: The third application detects an access request that is sent by the second application and that is for accessing the first storage space of the first application, where the access request is a request sent by the second application to the third application when the second application detects an operation request of a user for indicating to send the first data of the first application to the second electronic device.

For example, the third application is a backup service provided by a system of the first electronic device, and the second application is a clone application. In this case, a user operation corresponding to the operation request may be, for example, a related operation that the user taps on the first electronic device to run the clone application, and then selects "This is a new device" or "This is an old device".

In a possible implementation of the first aspect, that the third application establishes, in response to the access request, a second access path that has a mapping relationship with the first access path includes: The third application creates, in response to the access request, second storage space having a second access path. The third application establishes a correspondence between the second access path and the first access path by using an application launch service provided by the first electronic device, to enable the second access path to point to data that is in the first storage space and that corresponds to the first access path.

For example, the third application is a backup service provided by a system of the first electronic device, and the second storage space may be, for example, a first mapping directory that is correspondingly created by the backup service. Correspondingly, the second access path is, for example, an access path in the first mapping directory, and the first access path may be, for example, an access path corresponding to a data packet of application data in a first backup directory corresponding to a target application on the first electronic device. The target application may be a system application or a non-system application, that is, a third-party application.

In a possible implementation of the first aspect, that the third application sends the second access path to the second application includes: The third application sends a first handle corresponding to the second access path to the second application by using a global identifier, where the first handle serves as a tool for the third application to access the first storage space by using the second access path, and the first handle corresponds to the second access path. The second application obtains the second access path based on a correspondence between the first handle and the second access path.

In a possible implementation of the first aspect, that the second application accesses the first storage space of the first application by using the second access path includes: The second application generates a second handle based on the obtained second access path, where the second handle serves as a tool for the second application to access the first storage space by using the second access path. The second application invokes the generated second handle to access the first storage space of the first application.

For example, the third application is a backup service provided by a system of the first electronic device, the first storage space may be, for example, storage space of the target application, and the first handle may be, for example, a tool that can be invoked by the backup service to open the storage space of the target application. In this case, the backup service may share, with the second application, namely, the clone application, by using the global identifier, a handle that is in a process of the backup service and that is for opening the storage space of the target application. Further, the clone application may determine, based on the handle in the received global identifier, the corresponding second access path, that is, an access path corresponding to the handle in the backup service. Based on the access path, the clone application may generate a new handle that is in a process of the clone application and that corresponds to the access path, to access or open the storage space of the target application, for example, the first storage space, by using the access path.

In a possible implementation of the first aspect, the global identifier includes a uniform resource locator URI, the URI specifically includes a file information field, and the file information field is a mapped string corresponding to the first handle.

In a possible implementation of the first aspect, the first application includes a system application or a third-party application, the second application includes a clone application, and the third application includes a backup service provided by the first electronic device.

According to a second aspect, an embodiment of this application provides a data access apparatus, applied to a first electronic device, where the first electronic device includes a first application and a second application, and the apparatus includes:
a backup module, configured to detect an access request of the second application for first storage space of the first application, where the first storage space has a first access path; and configured to: establish, in response to the access request, a second access path that has a mapping relationship with the first access path, and send the second access path to the second application. According to a third aspect, an embodiment of this application provides an electronic device, including one or more processors and one or more memories. The one or more memories store one or more programs, and when the one or more programs are executed by the one or more processors, the electronic device is enabled to perform the data access method provided in the first aspect and the possible implementations of the first aspect.

According to a fourth aspect, an embodiment of this application provides a computer-readable storage medium. The storage medium stores instructions, and when the instructions are executed on a computer, the computer is enabled to perform the data access method provided in the first aspect and the possible implementations of the first aspect.

According to a fifth aspect, an embodiment of this application provides a computer program product, including a computer program or instructions. When the computer program or the instructions are executed by a processor, the data access method provided in the first aspect and the possible implementations of the first aspect is implemented.

**In** conclusion, based on the data access method, the electronic device, and the computer-readable storage medium provided in embodiments of this application, a sending device side no longer needs to copy to-be-transmitted application data from storage space of a target application to storage space of a backup service of a system, and then copy the to-be-transmitted application data from the storage space of the backup service of the system to storage space of a data transmission application. Correspondingly, a receiving device side also no longer needs to copy the received application data from the storage space of the data transmission application to the storage space of the backup service of the system, and then copy the received application data from the storage space of the backup service of the system to the storage space of the target application. This avoids a great challenge brought by a procedure of copying a large amount of data to data processing performance of the electronic device, and resolves a problem of increased system power consumption caused by copying a large amount of data.

### BRIEF DESCRIPTION OF DRAWINGS

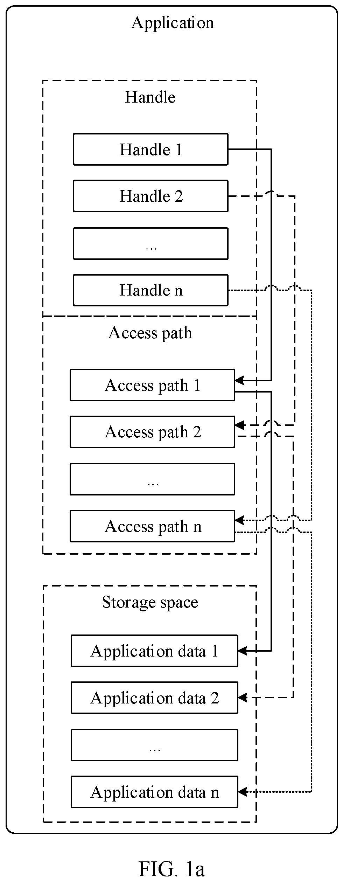

FIG. 1a is a diagram of a principle of accessing storage space through a handle in a running procedure of an application;
FIG. 1b-1 to FIG. 1b-4 are a diagram of an application scenario of a data access method according to an embodiment of this application;
FIG. 2 is a diagram of a data transmission procedure;
FIG. 3a is a diagram of a correspondence between a handle of each application or service, an access path, and to-be-transmitted related data in storage space in a system of an electronic device according to an embodiment of this application;
FIG. 3b is a diagram of a data transmission procedure according to an embodiment of this application;
FIG. 4A and FIG. 4B are a diagram of an interaction procedure of a data access method according to an embodiment of this application;
FIG. 5 is a diagram of a data backup procedure in a data access method according to an embodiment of this application;
FIG. 6 is a diagram of related operations performed by a data transmission application, a backup service, and a target application that are run by an electronic device 100 in a backup procedure to implement data backup according to an embodiment of this application;
FIG. 7 shows a directory mapping procedure from a first backup directory to a first mapping directory completed by using an application launch service provided by a system of an electronic device 100 according to an embodiment of this application;
FIG. 8 is a diagram of a data recovery procedure in a data access method according to an embodiment of this application;
FIG. 9 is a diagram of related operations performed by a data transmission application, a backup service, and a target application that are run by an electronic device 200 in a backup procedure to implement data backup according to an embodiment of this application;
FIG. 10 is a diagram of a hardware structure of an electronic device 100 according to an embodiment of this application;
FIG. 11 is a block diagram of a system architecture of an electronic device 100 according to an embodiment of this application; and
FIG. 12 is a block diagram of a system architecture of another electronic device 100 according to an embodiment of this application.

### DESCRIPTION OF EMBODIMENTS

To make the objectives, technical solutions, and advantages of embodiments of this application clearer, the following describes in detail the technical solutions in embodiments of this application with reference to the accompanying drawings and specific implementations of this specification. It should be further stated that steps in the methods and processes are numbered in embodiments of this application for ease of reference, but not for limiting a sequence. If there is a sequence between the steps, the text description shall be used.

To help a person skilled in the art understand the solutions in embodiments of this application, the following first explains and describes some concepts and terms in embodiments of this application.
(1) Inter-process communication (IPC) is transmission or exchange of information between different processes. Manners of IPC usually include pipes (including anonymous pipes and named pipes), message queues, semaphores, shared memories, Socket, Streams, and the like. Socket and Streams can support IPC between two processes on different hosts.
(2) A sandbox (Sandbox) is a virtual system program that is essentially a running environment limiting access of an application to system resources. The environment provided by the sandbox for each running program is independent.
   A Linux namespace (namespace) isolation mechanism provides a basis for implementation of a sandbox technology. After namespace isolation is used in the sandbox technology, system resources, except for a kernel, such as a Unix time-sharing operating system, inter-process communication (IPC), a file system, a process identifier, and the like in a host are no longer global, but belong to a specific namespace. Resources in each namespace are transparent and invisible to other namespaces. The sandbox uses this feature to implement resource isolation. Processes in different sandboxes belong to different namespaces, are transparent to each other, and do not interfere with each other. For example, a process sandbox of a third-party application like WeChat^{™} or Weibo^{™}, a backup service process sandbox of a system, and a process sandbox of a clone application are isolated from each other and do not interfere with each other. Cross-process data exchange may be implemented by using technologies such as IPC.
(3) A uniform resource identifier (Uniform Resource Identifier, URI) is a computer term, and refers to a string used to identify a name of an internet resource. For example, an HTML document, an image, a video clip, an application, or an access path corresponding to a directory may be identified by using a URI. The URI allows a user to perform an interaction operation on any resource (including local resources and internet resources) through specific protocols. A definition of the URI may be determined by a scheme that includes the determining of syntax and related protocols. It may be understood that the URI generally includes three parts: ① a naming mechanism for a resource; ② a name of a host that stores the resource; and ③ a name of the resource. For example, a URI such as "https://blog.csdn.net/qq_32595453/article/details/79516787" may be understood as follows: ① This is a resource that can be accessed through an HTTPS protocol; ② The resource is located on a host blog.csdn.net; and ③ A name of the resource is "/qq_32595453/article/details/79516787".
(4) A handle (handle) is an unsigned integer that represents an internal memory object but does not actually point to the internal memory object. This is because generally an application in a user mode cannot obtain an actual address of an internal memory object. That is, a handle may serve as an index to search for an actual address of a corresponding internal memory object in a table, and the table is a handle table under a corresponding process. It may be understood that each process has a handle table, and a first item of the table is a handle of the process. There are many internal memory objects in a system, such as an opened file, a created thread, an application window, and the like. Correspondingly, handles in the handle table that correspondingly point to actual addresses of the internal memory objects may include a file handle, a thread handle, a window handle, and the like.

It may be understood that, in an operating system based on a virtual internal memory, an internal memory manager often moves the foregoing internal memory objects back and forth in the internal memory, to meet requirements of various applications. Movement of an internal memory object means that an access path of the object changes accordingly. To adapt to the change of the access path, a system of an electronic device allocates a fixed access path corresponding to each internal memory object to each application. The access path is used to describe a location, in corresponding internal memory space, of the corresponding internal memory object, and may register a location change of each internal memory object in storage space, and the access path allocated by the system to each application is unchanged.

As shown in FIG. 1a, the foregoing internal memory object may be, for example, application data 1, application data 2, ..., and application data n corresponding to an application shown in FIG. 1a. Access paths corresponding to the application data may be an access path 1, an access path 2, ..., and an access path n shown in FIG. 1a. A handle 1 shown in FIG. 1a correspondingly points to the access path 1 used to access the application data 1, a handle 2 shown in FIG. 1a correspondingly points to the access path 2 used to access the application data 2, and a handle n shown in FIG. 1a correspondingly points to the access path n used to access the application data n.

FIG. 1b-1 to FIG. 1b-4 are a diagram of an application scenario of a data access method according to an embodiment of this application.

As shown in FIG. 1b-1 to FIG. 1b-4, the scenario includes a mobile phone 100. For example, the mobile phone 100 is a new device of a user for replacement, or may be an old device replaced by the user. The user may tap a setting application icon 011 on a desktop 101 of the mobile phone 100 to launch a setting application. The mobile phone 100 displays a setting interface 102 in response to an operation of the user for launching the setting application.

Further, the user may perform a sliding operation in the setting interface 102, for example, an operation like sliding up and down or sliding left and right, to find a functional option 021 "System & updates", and tap the functional option 021. In this way, the mobile phone 100 may display, in response to the tap operation, a functional interface 103 corresponding to "System & updates". In the functional interface 103, the user may tap a functional option 031 "Phone clone", or tap a functional option 032 "Backup & recovery" to perform data cloning, backup, recovery, or the like. For example, the user taps the functional option 031 "Phone clone" in the functional interface 103, so that the user may select "This is an old device" on a clone interface 104 displayed on the mobile phone 100 to send data, and then the user may select, based on a prompt, a device to which data on the mobile phone 100 is to be transmitted, that is, specify a receiving device. After the user determines the receiving device for data transmission based on an operation prompt further displayed by the mobile phone 100 and initiates a connection, the mobile phone 100 may establish a communication connection to the receiving device. In this embodiment of this application, the communication connection may be implemented, for example, by establishing a data transmission channel between data transmission applications that are respectively run by the mobile phone 100 and the receiving device. The data transmission application is an application used to implement cross-device data transmission. The data transmission application may be, for example, a phone transfer clone application (briefly referred to as a clone application), or a clone functional component in the setting application. The data transmission channel may be, for example, a channel established based on Wi-Fi to which both the mobile phone 100 and the receiving device are connected, or a channel established by the mobile phone 100 and the receiving device based on a Bluetooth connection. This is not limited herein. In this way, application data, pictures, files, and the like on the mobile phone 100 may be transmitted to the receiving device through the data transmission channel.

In some other embodiments, the user may alternatively select "This is a new device" in the clone interface 104 displayed on the mobile phone 100 to receive data, and then the user may select, based on a prompt, a device from which data is transmitted to the current mobile phone 100. This is not limited herein.

Similarly, if the user selects the functional option 032 "Backup & recovery" in the functional interface 103 "System & updates" displayed on the mobile phone 100, and selects to back up data to a specified receiving device or back up data to a cloud, a procedure of sending data on the mobile phone 100 to the receiving device or the cloud may be triggered. If the user selects to recover the data locally, a procedure of receiving data from another device or the cloud to the mobile phone 100 may be triggered. A specific user operation that triggers a data transmission procedure is not limited herein in this application.

For the data transmission scenario shown in FIG. 1b-1 to FIG. 1b-4, FIG. 2 is a diagram of a data transmission procedure.

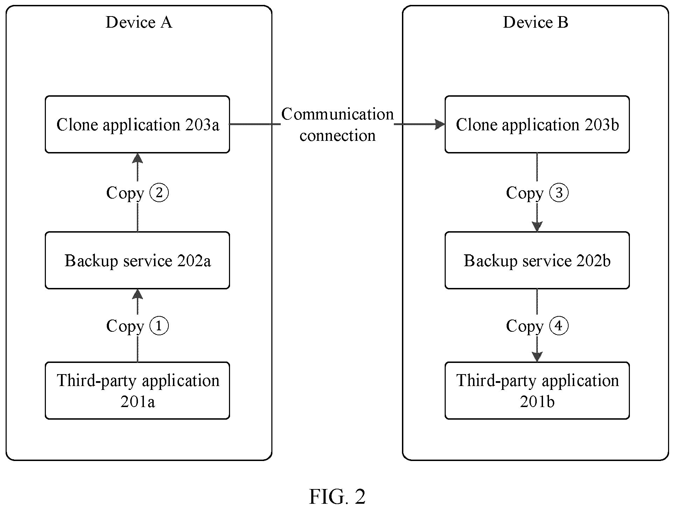

As shown in FIG. 2, when application data corresponding to a third-party application 201a installed on a device A needs to be transmitted to a device B, a backup service 202a in a system of the device A needs to first copy, in a cross-process manner through IPC, the application data from storage space correspondingly allocated to a process in which the third-party application 201a is located, and store the application data in storage space correspondingly allocated to a process corresponding to the backup service 202a, that is, a procedure corresponding to copy ① shown in FIG. 2. The application data may include but is not limited to an application package, historical running data generated in a running procedure of the application, and the like.

It may be understood that, in this embodiment of this application, storage space correspondingly allocated to a process is a namespace in which various data resources that can be invoked by a corresponding program running process are located, and is also an independent running environment of the corresponding process. The application data belongs to the third-party application 201a, and therefore is located in a namespace mounted to the third-party application 201a, that is, in the storage space correspondingly allocated to the process in which the third-party application 201a is located.

Then, a clone application 203a configured to implement cross-device data transmission copies, through IPC, the application data from the storage space correspondingly allocated to the process in which the backup service 202a is located, and stores the application data to storage space correspondingly allocated to a process in which the clone application 203a is located, that is, a procedure corresponding to copy ② shown in FIG. 2. Further, the clone application 203a on the device A transmits, through a data transmission channel established between the clone application 203a on the device A and a clone application 203b running on the device B, the copied application data to storage space correspondingly allocated to a process in which the clone application 203b on the device B is located.

Then, a process in which a backup service 202b on the device B is located further copies the application data from the storage space correspondingly allocated to the process of the clone application 203b, that is, a procedure corresponding to copy ③ shown in FIG. 2. A process in which a third-party application 201b on the device B is located further copies the application data from the storage space correspondingly allocated to the process of the backup service 202b, that is, a procedure corresponding to copy ④ shown in FIG. 2. **In** this way, after the above four application data copying procedures, the process in which the third-party application 201b on the device B is located may update, by using the copied application data, an application package, historical running data, and the like of the third-party application 201b, to implement data synchronization with the third-party application 201a on the device A.

It is clear that the data transmission procedure shown in FIG. 2 needs to undergo a plurality of data copy procedures. The procedure of copying a large amount of data brings a great challenge to data processing performance of an electronic device. **In** addition, the procedure of copying a large amount of data also occupies many storage resources of storage space correspondingly allocated to each process, and causes an increase in system power consumption.

To resolve the foregoing problem, an embodiment of this application provides a data access method, applied to an electronic device. Specifically, on a sending device side, when responding to a user operation to clone application data, a data transmission application may directly perform a read operation on related data in storage space of a target application. Because data of applications is isolated from each other, the related data of the target application cannot be directly provided for the data transmission application. Therefore, the target application may share an access path corresponding to the related data with the data transmission application by using a backup service of a system. In addition, because an application located at an application layer needs to open the storage space by using a handle that is in a process corresponding to the application and that corresponds to the access path of the storage space to read data, the sharing the access path corresponding to the related data with the data transmission application by using the backup service of the system may be implemented by sharing a handle in a process of the backup service with the data transmission application.

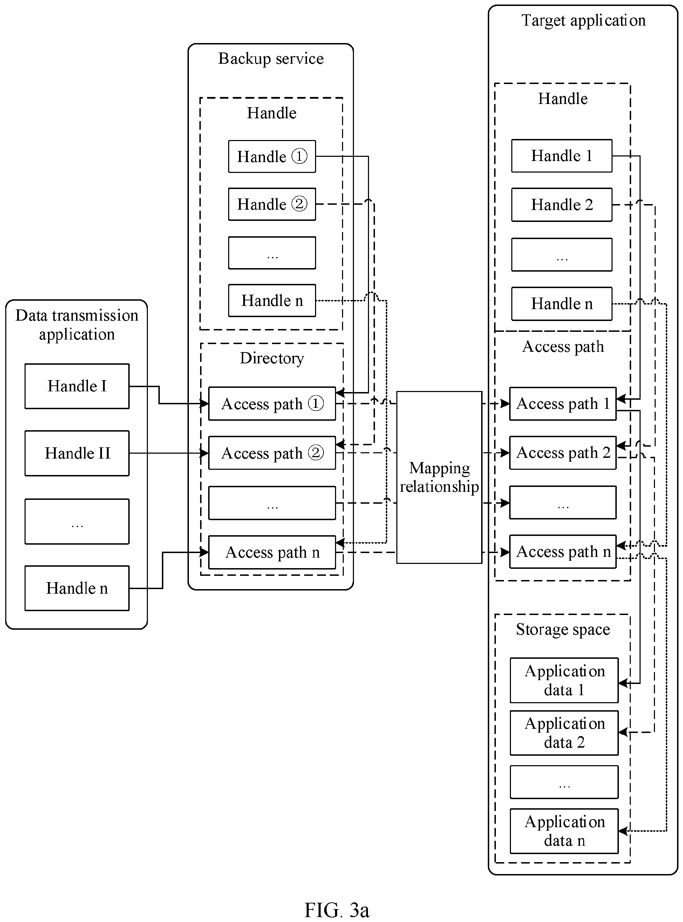

For example, as shown in FIG. 3a, a specific implementation means may be first writing, through mapping, the access path corresponding to the related data in the storage space of the target application into a directory created in the backup service, to form an access path that is in the backup service and that is used to access the related data in the storage space of the target application. For example, an access path 1 corresponding to application data 1, an access path 2 corresponding to application data 2, ..., and an access path n corresponding to application data n shown in FIG. 3a may be written into a directory of the backup service, to form an access path ①, an access path ②, ..., and an access path n. In this case, the backup service and the target application may use different access paths (for example, the access path ① and the access path 1) of respective processes to open related data (for example, the application data 1) in same storage space. Then, the backup service may share, with the data transmission application by using a global identifier, handles that are in the process of the backup service and that correspond to the access paths, for example, a handle ① corresponding to the access path ① and a handle ② corresponding to the access path ② shown in FIG. 3a. Based on a correspondence between each handle and each access path in the backup service, the data transmission application may obtain the corresponding access paths from the handles shared by the backup service.

Further, the data transmission application may establish a correspondence between each handle in a process of the data transmission application and each obtained access path in the backup service, for example, a correspondence between a handle I and the access path ①, a correspondence between a handle II and the access path ②, and the like shown in FIG. 3a. In this case, the data transmission application can access the access path ①, the access path ②, and the like in the backup service through the handle I, the handle II, and the like, to open and read the corresponding application data 1, application data 2, and the like in the storage space of the target application, and send the application data 1, the application data 2, and the like to a receiving device. That is, in this case, the data transmission application and the backup service may open same data (for example, the application data 1) by using a same access path (for example, the access path ①) through handles (for example, the handle I and the handle ①) in respective processes.

Correspondingly, on a receiving device side, when responding to a user operation to receive the application data, a data transmission application may directly perform a write operation on the storage space of the target application. Specifically, when a receiving device prepares an installation environment of the target application, the to-be-installed or updated target application may further share an access path corresponding to required related data with the data transmission application by using the backup service of the system. The sharing procedure may alternatively be implemented, for example, by sharing a handle in the procedure of the backup service with the data transmission application.

For example, still as shown in FIG. 3a, a specific implementation means may also be first establishing a mapping relationship between the access path 1, the access path 2, and the like in the target application and the access path ①, the access path ②, and the like in the backup service. Then, the backup service may share, with the data transmission application by using the global identifier, handles that are in the process of the backup service and that correspond to the access paths, for example, the handle ① corresponding to the access path ① and the handle ② corresponding to the access path ② shown in FIG. 3a. Further, the data transmission application may correspondingly obtain corresponding access paths based on the handles shared from the backup service, and generate, in the process of the data transmission application, handles corresponding to the access paths, for example, the handle I corresponding to the access path ① and the handle II corresponding to the access path ②. In this case, the data transmission application may use the access path ①, the access path ②, and the like in the backup service through the handle I, the handle II, and the like, to open the storage space of the target application, and write the corresponding application data 1, application data 2, and the like.

In some embodiments, the related data of the target application may be, for example, a data packet obtained by correspondingly packing application data that is allowed to be cloned by the target application. The foregoing read operation performed by the data transmission application on the sending device side on the related data in the storage space of the target application may be implemented, for example, by invoking a corresponding handle by using a read function readdir(). The write operation performed by the data transmission application on the receiving device side on the storage space of the target application may be implemented, for example, by invoking a corresponding handle by using a write function writedir(). The global identifier may be, for example, a uniform resource identifier URI. This is not limited herein.

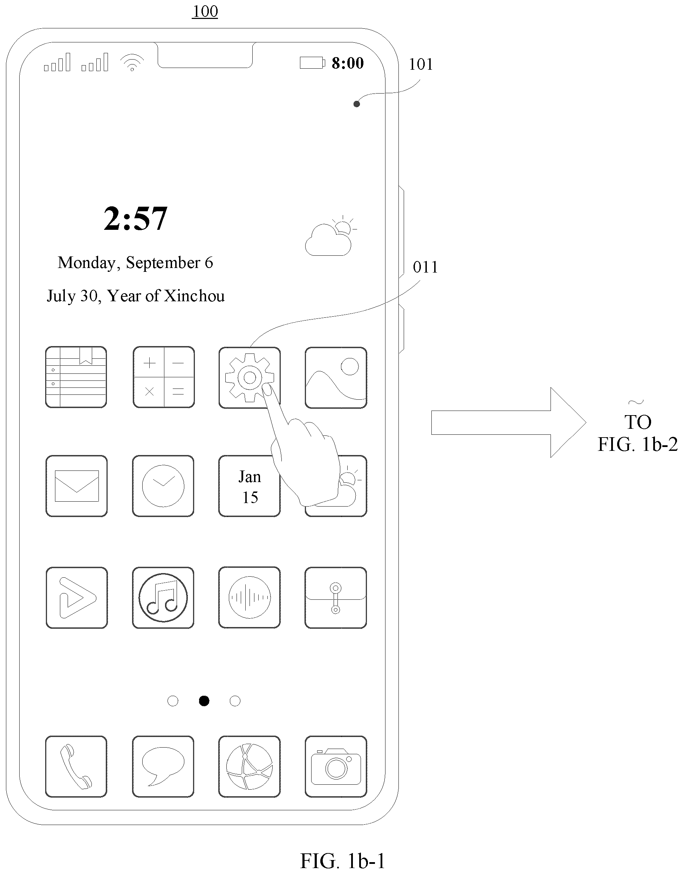

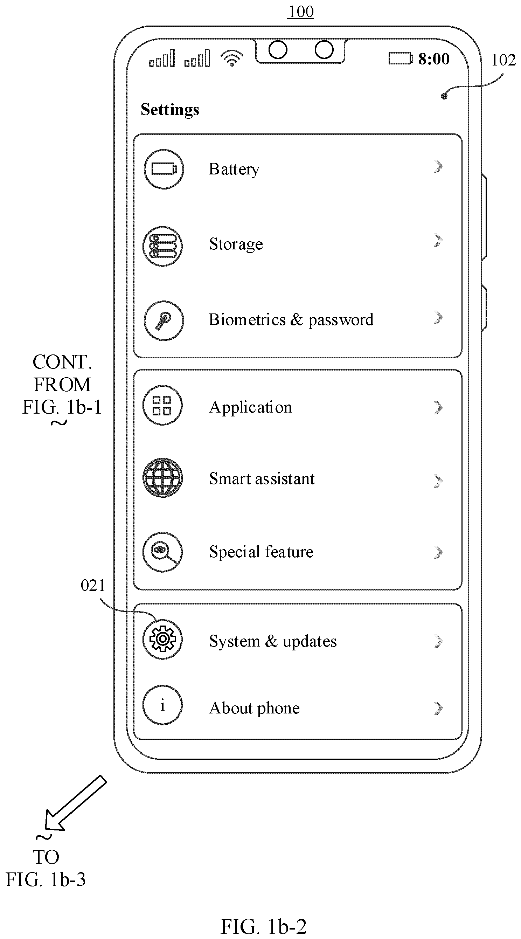

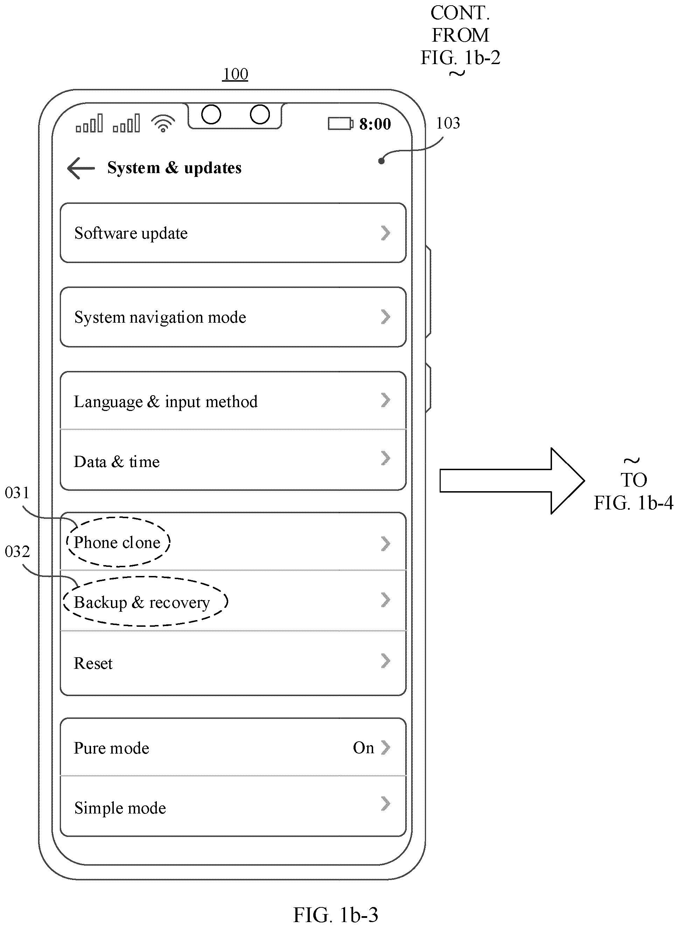

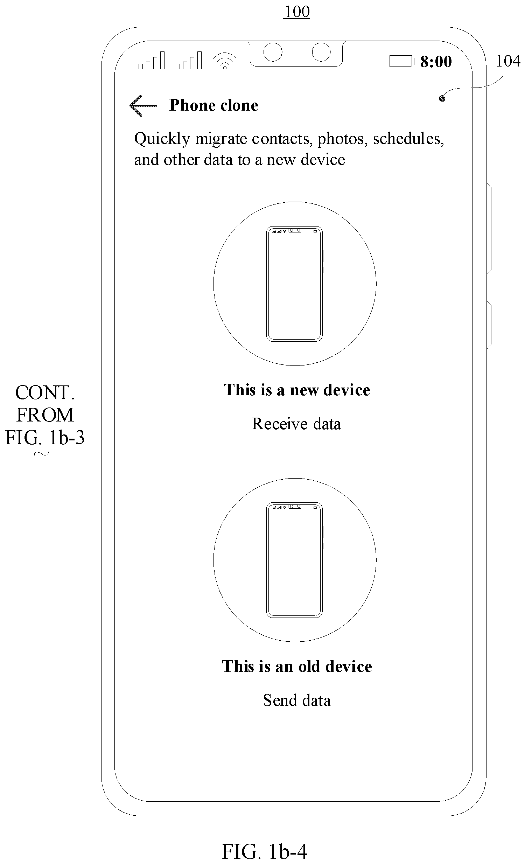

It may be understood that the target application may be a system application, or may be a non-system application, that is, a third-party application. The system application is an application that does not provide an uninstallation option in a normal use procedure, and the non-system application is an application that can be installed or uninstalled based on a user requirement. The data transmission application may be, for example, the clone application or the functional module for cloning data shown in FIG. 1b-3, or may be the backup and recovery application or the functional module shown in FIG. 1b-3. This is not limited herein.

Based on the foregoing data access method provided in this embodiment of this application, the sending device side no longer needs to copy the to-be-transmitted application data from the storage space of the target application to the storage space of the backup service of the system, and then copy the to-be-transmitted application data from the storage space of the backup service of the system to the storage space of the data transmission application. Correspondingly, the receiving device side also no longer needs to copy the received application data from the storage space of the data transmission application to the storage space of the backup service of the system, and then copy the received application data from the storage space of the backup service of the system to the storage space of the target application. In this way, a data processing amount and occupied storage resources corresponding to data access performed by the electronic device in a data transmission scenario like data cloning or data backup are reduced, thereby helping reduce system power consumption.

In addition, according to the data access method provided in this embodiment of this application, in a procedure of transferring an access path of the related data of the target application to the data transmission application by using directory mapping and sharing the global identifier, only a mapping procedure of a corresponding access path, a procedure of sharing a handle by using the global identifier such as the URI, and a procedure of invoking a read/write function based on a handle are involved. In comparison with a procedure of transmitting the application data in the sending device or the receiving device, an occupied bandwidth is smaller. Therefore, a data transmission amount can be reduced, to help improve data transmission efficiency and performance inside the sending device and the receiving device.

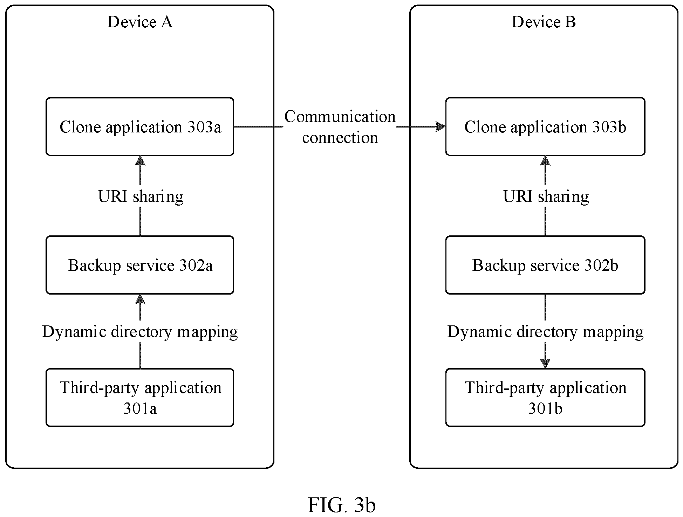

FIG. 3b is a diagram of a data transmission procedure according to an embodiment of this application.

As shown in FIG. 3b, an example in which the target application is a third-party application and the data transmission application is a clone application is still used. When application data corresponding to a third-party application 301a installed on a device A needs to be transmitted to a device B, the third-party application 301a of the device A may first pack the related application data into a first backup directory. Then, the device A may correspondingly use a configuration file related to the first backup directory, for example, an access path of each data packet in the directory, as an access path stored in a first mapping directory that is correspondingly created on a backup service 302a, that is, a "dynamic directory mapping" procedure on the device A shown in FIG. 3b, which is also a procedure of mapping and writing the access path corresponding to each data packet in the first backup directory into the first mapping directory.

The first mapping directory is only used to store an access path and does not store any data. Then, the backup service 302a in a system of the device A may share, by using a URI sharing technology, a handle corresponding to the access path in the first mapping directory with a data transmission application, for example, a clone application 303a shown in FIG. 3b, by using a URI of the first mapping directory, so that the clone application 303a performs a read operation, a write operation, or the like on the first mapping directory. This procedure is a URI sharing procedure on the device A shown in FIG. 3b.

In this way, based on the dynamic directory mapping and the foregoing URI sharing technology, the solution provided in this embodiment of this application can effectively avoid a plurality of data copy procedures between the third-party application, the backup service, and the data transmission application, thereby helping reduce a data transmission amount and reduce storage space occupied by the transmitted data.

Then, the clone application 303a on the device A may transmit a read data packet in the first backup directory to a clone application 303b on the device B through a data transmission channel established between the clone application 303a on the device A and the clone application 303b running on the device B.

Then, a backup service 302b on the device B may share an access path in a corresponding second mapping directory with the clone application 303b by using a URI, and the clone application 303b may correspondingly write the received data packet into the second mapping directory based on the URI of the second mapping directory. The second mapping directory may be an empty directory with content being null. This procedure is a URI sharing procedure on the device B shown in FIG. 3b. Further, based on a mapping relationship between a second backup directory of a third-party application 301b and the second mapping directory of the backup service 302b, the data packet may also be correspondingly mapped and written into the second backup directory of the third-party application 301b on the device B, that is, a dynamic directory mapping procedure on the device B shown in FIG. 3b. Finally, the third-party application 301b on the device B unpacks the data packet in the second backup directory to corresponding application data storage space, to complete transmission of the application data.

Compared with the data transmission procedures shown in FIG. 2 and FIG. 3b, it may be understood that, in the data transmission procedure provided in this embodiment of this application shown in FIG. 3b, a plurality of procedures of copying, inside each electronic device, data that needs to be transmitted can be ingeniously avoided, and an internal data transmission procedure between a data transmission application having a cross-device data transmission function and a target application is implemented, by using a dynamic directory mapping technology and a URI sharing technology, inside a sending device that provides to-be-transmitted data and a receiving device that receives the to-be-transmitted data. The cross-process data transmission amount is smaller, and the data transmission efficiency is higher.

It may be understood that an electronic device serving as a sending device or a receiving device to which the data access method provided in this embodiment of this application is applicable may include but is not limited to a mobile phone, a tablet computer, a desktop computer, a laptop computer, a handheld computer, a netbook, an augmented reality (augmented reality, AR) or virtual reality (virtual reality, VR) device, a smart television, a wearable device such as a smartwatch, a server, a mobile email device, an in-vehicle infotainment device, a portable game console, a portable music player, a reader device, a television in which one or more processors are embedded or coupled, or another electronic device that can access a network.

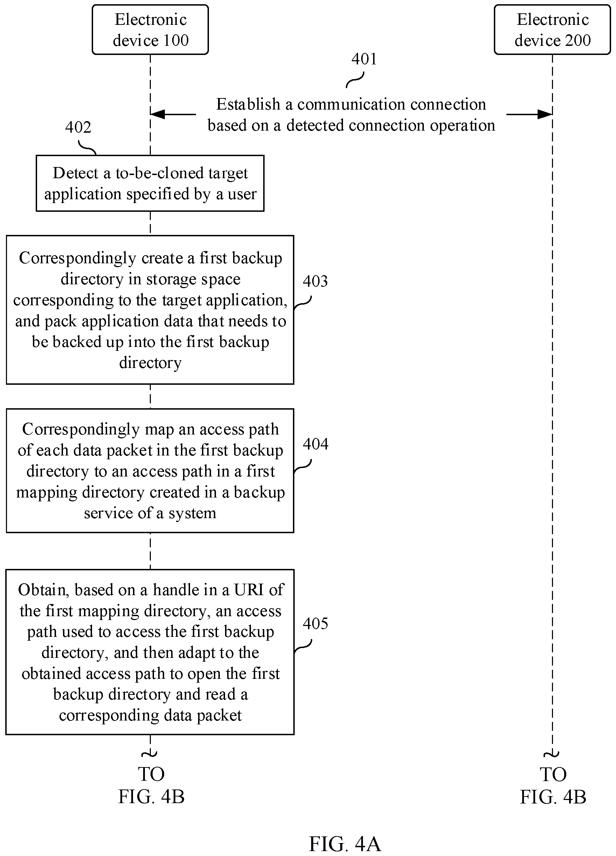

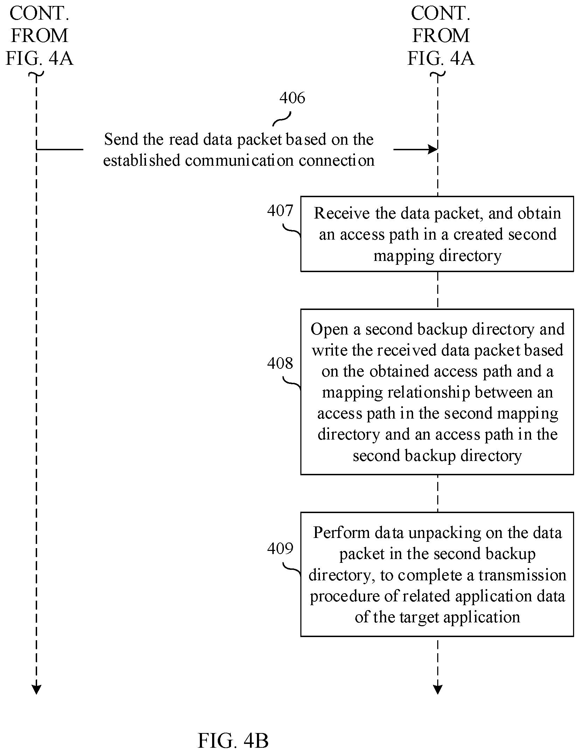

FIG. 4A and FIG. 4B are a diagram of an interaction procedure of a data access method according to an embodiment of this application. It may be understood that, to clearly describe an implementation procedure of the data access method provided in this embodiment of this application, steps in the procedure shown in FIG. 4A and FIG. 4B are performed by an electronic device 100 and an electronic device 200. The electronic device 100 may be a sending device, for example, the device A shown in FIG. 3b, that is, an electronic device that provides to-be-transmitted data. The electronic device 200 may be a receiving device, for example, the device B shown in FIG. 3b, that is, an electronic device that receives the to-be-transmitted data.

As shown in FIG. 4A and FIG. 4B, the interaction procedure includes the following steps.

401: The electronic device 100 and the electronic device 200 establish a communication connection based on a detected connection operation.

For example, the electronic device 100 and the electronic device 200 may be connected to a same wireless local area network, for example, connected to same Wi-Fi. When detecting a connection operation performed by a user in a related interface of a data transmission application, the electronic device 100 may establish a connection to the electronic device 200 in response to the operation of the user. For example, the data transmission application may be a clone application corresponding to "Phone clone" in the scenario shown in FIG. 1. For example, the user may tap "This is a new device" in the clone interface 104 shown in FIG. 1b-4 to invoke a two-dimensional code for connection of the mobile phone 100, to provide the two-dimensional code for the electronic device 200 to perform a related operation of code scanning. In some other embodiments, the connection operation may alternatively be a related operation of tapping "This is an old device" in the clone interface 104 shown in FIG. 1b-4 and scanning a two-dimensional code for connection displayed by the electronic device 200. This is not limited herein. Further, a data transmission channel between data transmission applications may be established between the electronic device 100 and the electronic device 200.

In some other embodiments, the procedure of establishing the communication connection in step 401 may alternatively be initiated by the electronic device 200 when the electronic device 200 detects a related connection operation of the user. This is not limited herein.

402: The electronic device 100 detects a to-be-cloned target application specified by the user.

For example, after the communication connection between the electronic device 100 and the electronic device 200 is established, the electronic device 100 and/or the electronic device 200 may display a related interface indicating a successful connection, or display a related interface prompting the user to select data that needs to be backed up. The data that needs to be backed up may include an application, a picture, a video, an audio file, and the like that are selected by the user in a corresponding interface for backup. This is not limited herein. In this embodiment of this application, an example in which the data selected by the user for backup is an application is used to describe execution content of each step. The application is the to-be-cloned target application specified by the user.

403: The electronic device 100 correspondingly creates a first backup directory in storage space corresponding to the target application, and packs application data that needs to be backed up into the first backup directory.

For example, the electronic device 100 may run the target application in response to an operation of the user for specifying the target application, create, by using a process of the target application, the first backup directory in the correspondingly allocated storage space, and pack the application data that needs to be backed up into the first backup directory, and the like.

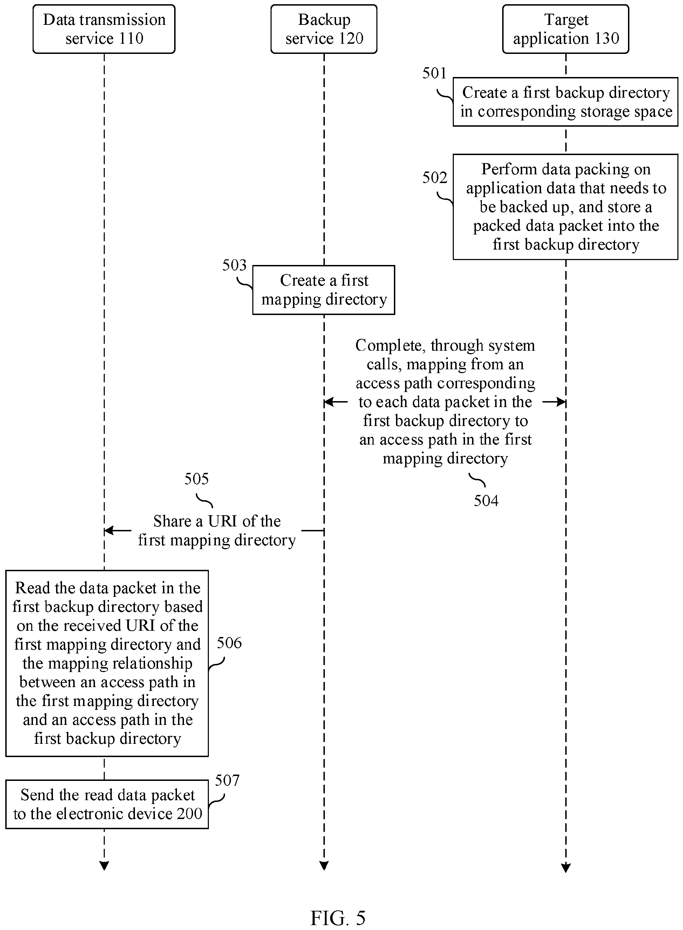

For a specific procedure of creating the first backup directory for the target application and performing data packing on the application data in the electronic device 100, refer to related descriptions in steps 501 and 502 in the following procedure shown in FIG. 5. Details are not described herein.

404: The electronic device 100 correspondingly maps an access path of each data packet in the first backup directory to an access path in a first mapping directory created in a backup service of a system.

For example, after storing the packed data packet in the first backup directory based on the target application, the electronic device 100 may control, in a directory mapping manner, to map the data packet in the first backup directory to the first mapping directory correspondingly created in the backup service of the system, for example, correspondingly map the access path of each data packet in the first backup directory to the access path stored in the first mapping directory in the backup service. The first mapping directory may store only an access path and does not store other data. In this way, the backup service, the data transmission application, or the like may open, based on the access path in the first mapping directory, the first backup directory in the target application to read a corresponding data packet.

For a specific procedure of completing directory mapping between the first backup directory and the first mapping directory in the electronic device 100, refer to related descriptions in steps 503 and 504 in the following procedure shown in FIG. 5. Details are not described herein.

405: The electronic device 100 obtains, based on a handle in a URI of the first mapping directory, an access path used to access the first backup directory, and then adapts to the obtained access path to open the first backup directory and read a corresponding data packet.

For example, the backup service in the electronic device 100 may share, by using the URI of the first mapping directory, a handle corresponding to the access path in the first mapping directory with the data transmission application for transmitting data, so that the data transmission application may obtain, based on the handle in the URI, the corresponding access path that is in the backup service and that is used to open the first backup directory of the target application, and then open the first backup directory by using a handle correspondingly generated in a process of the data transmission application, to read the corresponding data packet.

For a specific procedure of sharing the URI in the electronic device 100 and reading the data packet based on the URI, refer to related descriptions in steps 505 and 506 in the following procedure shown in FIG. 5. Details are not described herein.

406: The electronic device 100 sends the read data packet to the electronic device 200 based on the established communication connection.

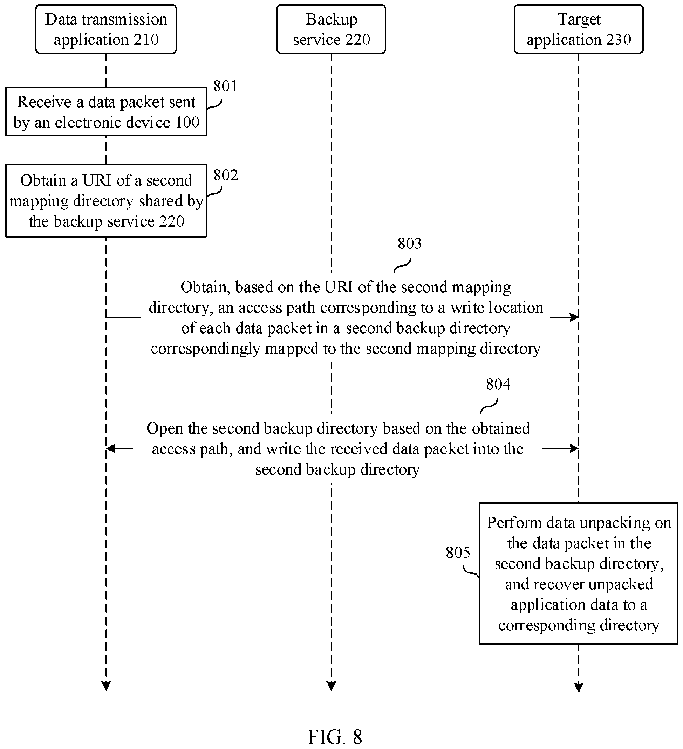

For example, the electronic device 100 may send, by using the data transmission application, the data packet that is in the first backup directory and that is read based on the URI to the data transmission application on the currently connected electronic device 200. For a specific procedure of transmitting the data packet between the electronic device 100 and the electronic device 200 by using the running data transmission applications, refer to related descriptions in step 507 in the following procedure shown in FIG. 5 and step 801 in the following procedure shown in FIG. 8. Details are not described herein.

407: The electronic device 200 receives the data packet, and obtains an access path in a created second mapping directory.

For example, the electronic device 200 may receive, by using the data transmission application, the data packet sent by the electronic device 100 by using the data transmission application. In addition, the data transmission application in the electronic device may obtain the corresponding access path in the second mapping directory by using a handle carried in a URI of the second mapping directory shared by a backup service of a system. The second mapping directory may be a directory that is correspondingly created by the backup service of the system for installing a target application, and the second mapping directory may be an empty directory with content being null. It may be understood that each access path in the second mapping directory is correspondingly mapped to an access path corresponding to each to-be-written data packet in a second backup directory in the target application. That is, the second backup directory may be opened based on access to each access path in the second mapping directory, to write a related data packet.

For a specific detailed procedure in which the electronic device 200 obtains the access path in the second mapping directory, refer to related descriptions in step 802 in the following procedure shown in FIG. 8. Details are not described herein.

408: The electronic device 200 opens the second backup directory and writes the received data packet based on the obtained access path and a mapping relationship between an access path in the second mapping directory and an access path in the second backup directory.

For example, the electronic device 200 accesses the second backup directory based on the obtained access path and the mapping relationship between the second mapping directory and the second backup directory, and may write the received corresponding data packet into the second backup directory based on a handle obtained by accessing the second backup directory.

For a specific procedure of accessing the second backup directory based on the obtained access path and the mapping relationship between access paths, and mapping and writing the received data packet into the second backup directory, refer to related descriptions in steps 803 and 804 in the following procedure shown in FIG. 8. Details are not described herein.

409: The electronic device 200 performs data unpacking on the data packet in the second backup directory, to complete a transmission procedure of related application data of the target application. For example, after completing writing the data packet into the second backup directory, the electronic device 200 may invoke a corresponding running process of the target application, perform data unpacking on the data packet in the second backup directory, and store unpacked application data into an application data directory in a root directory corresponding to the target application. In this way, in a procedure in which the electronic device 200 runs the target application, the process of the target application may invoke application data in a corresponding directory to execute a corresponding task.

For a specific procedure of unpacking the data and recovering the application data, refer to related descriptions in step 805 in the following procedure shown in FIG. 8. Details are not described herein.

With reference to corresponding accompanying drawings, the following describes in detail a data backup procedure implemented in the electronic device 100 and a data recovery procedure implemented in the electronic device 200 in an implementation procedure of the data access method shown in FIG. 4A and FIG. 4B.

For example, FIG. 5 is a diagram of a data backup procedure in a data access method according to an embodiment of this application. It may be understood that steps in the procedure shown in FIG. 5 may be performed by a data transmission application 110, a backup service 120, and a target application 130 that are run by an electronic device 100.

As shown in FIG. 5, the procedure includes the following steps.

501: The target application 130 creates a first backup directory in corresponding storage space.

For example, after the electronic device 100 detects the to-be-cloned target application 130 specified by a user operation, the electronic device 100 may run the target application 130, and control the target application 130 to create the first backup directory used to back up related data. The target application 130 may be the third-party application 301a shown in FIG. 3b, for example, a WeChat^{™} application, a Weibo^{™} application, or a shopping application such as a JD^{™} application or the like. In some other embodiments, the target application 130 may alternatively be a system application, for example, a gallery application or a setting application. This is not limited herein.

502: The target application 130 performs data packing on application data that needs to be backed up, and stores a packed data packet into the first backup directory.

For example, after completing creation of the first backup directory, the target application 130 of the electronic device 100 may perform data packing (pack) on the application data that needs to be backed up, and store the corresponding data packet into the first backup directory. In embodiments of this application, data packing means compressing a directory in which corresponding application data is located or corresponding data into a corresponding compressed data packet. A format of the data packet obtained by data packing may be, for example, a ".tar" format. In some embodiments, after the directory is packed into the data packet by using a tar command, the data packet may be further compressed by using a gzip command, a bzip2 command, or the like, to facilitate transmission. Details are not described herein.

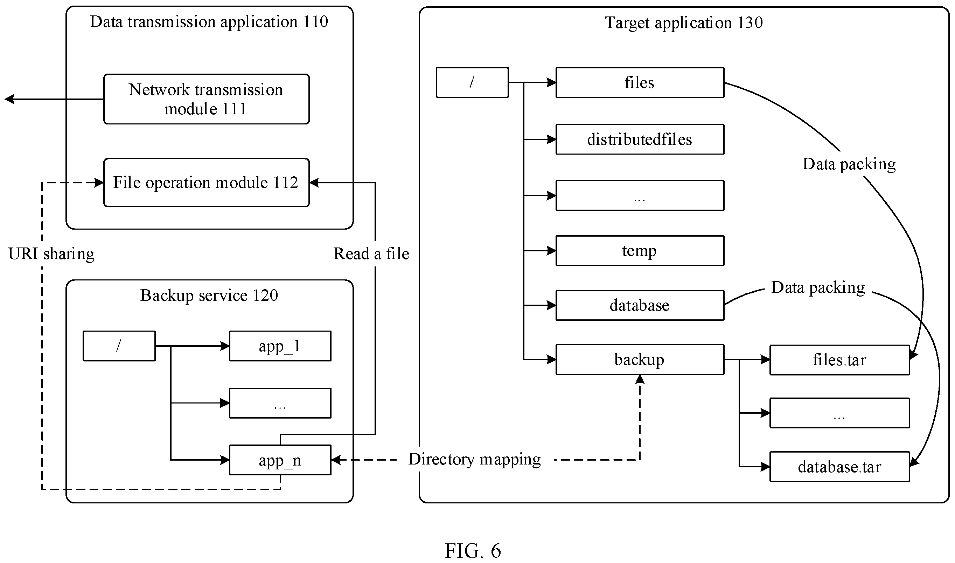

FIG. 6 is a diagram of related operations performed by a data transmission application, a backup service, and a target application that are run by the electronic device 100 in a backup procedure to implement data backup according to an embodiment of this application.

As shown in FIG. 6, the target application 130 may create the first backup directory "backup" in a root directory "/" created by a system for the target application 130, to store a data packet of corresponding application data. Then, the target application 130 may pack application data that needs to be transmitted, for example, application package files "files", distributed files "distributedfiles", and a database "database" shown in FIG. 6, into corresponding data packets "files.tar", "distributedfiles.tar", and "database.tar", and store the data packets into the first backup directory "backup".

It may be understood that, in some other embodiments, the first backup directory created by the target application 130 may alternatively be named in another manner different from "backup". This is not limited herein.

503: The backup service 120 creates a first mapping directory.

For example, in a data transmission procedure, the electronic device 100 needs to launch running of the backup service 120 provided by the system. The first mapping directory may be created when the backup service 120 runs, and is used to establish a mapping relationship with the first backup directory of the target application 130 in a manner like dynamic directory mapping. A specific procedure of establishing mapping with the first backup directory of the target application 130 is described in detail in the following step 504. Details are not described herein.

As shown in FIG. 6, the first mapping directory created by the backup service 120 may be, for example, a directory "app_n" shown in FIG. 6. The backup service 120 may correspondingly create mapping directories for different applications, and use mapping directory names corresponding to application package names of corresponding applications, for example, "app_1", "app_2", and "app_n". This is not limited herein.

504: The backup service 120 and the target application 130 complete, through system calls, mapping from an access path corresponding to each data packet in the first backup directory to an access path in the first mapping directory.

For example, after creation of the first mapping directory is completed in the backup service 120 of the electronic device 100, the target application 130 may map packed data packet files in the first backup directory to the first mapping directory. This mapping procedure may be implemented by using a global transaction processing capability of an application launch service provided by the system of the electronic device 100, or may be implemented in another manner, for example, by using some mapping algorithms, for example, bind mounts (bind mounts). This is not limited herein.

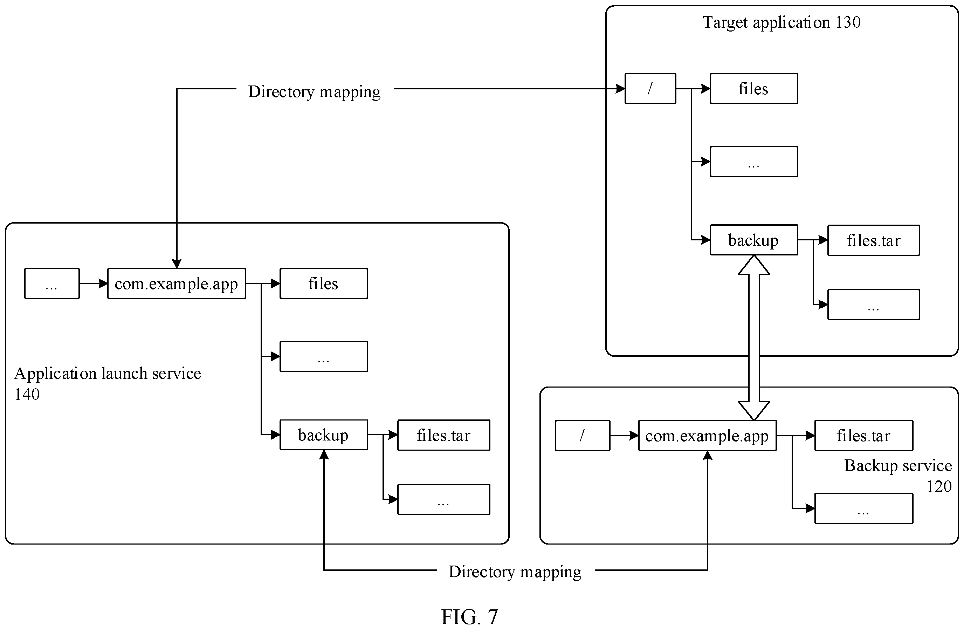

FIG. 7 shows a directory mapping procedure from the first backup directory to the first mapping directory completed by using the application launch service provided by the system of the electronic device 100 according to an embodiment of this application.

As shown in FIG. 7, when the target application 130 is launched to run in the system of the electronic device 100, a process in which the application launch service 140 is located may create a third backup directory corresponding to the target application 130. For the backup directory, refer to the third backup directory "backup" in the application launch service 140 shown in FIG. 7. Further, the application launch service 140 may perform, based on the global transaction processing capability of the application launch service 140, directory mapping between a parent directory "com.example.app" mounted to the created third backup directory and the root directory "/" of the target application 130. Correspondingly, the application package file "files", the distributed files "distributedfiles", the database "database", and the like in the target application 130, and the data in the created first backup directory may be correspondingly mapped to the directory "com.example.app" of the application launch service 140.

When the backup service 120 is launched to run, the application launch service 140 may correspondingly map data in the third backup directory to a directory "com.example.app" created in the backup service 120. In this way, the directory "com.example.app" in the backup service 120 may be mapped to the data packets in the first backup directory "backup" of the target application 130. It may be understood that the directory "com.example.app" that is in the backup service 120 and whose directory mapping is completed and the first backup directory "app_n" that is correspondingly created in the backup service 120 shown in FIG. 6 may be a same directory. In some other embodiments, the directory "com.example.app" created in the backup service 120 or the first backup directory "app_n" in FIG. 6 may alternatively have another name. This is not limited herein.

It may be understood that, after the system of the electronic device 100 completes the directory mapping procedure shown in FIG. 7, the directory "com.example.app" in the backup service 120 and the first backup directory "backup" in the target application 130 are equivalent directories, and the root directory "/" in the target application 130 and the directory "com.example.app" in the application launch service 140 are also equivalent directories. In this way, an operation on the directory "com.example.app" in the backup service 120 may be equivalent to an operation on the first backup directory "backup" in the target application 130.

505: The backup service 120 shares a URI of the first mapping directory with the data transmission application 110.

For example, the backup service 120 of the electronic device 100 may generate the URI of the first mapping directory based on a handle corresponding to each access path in the first mapping directory, and the URI may carry, for example, the handle corresponding to each access path in the first mapping directory. As described above, the corresponding first backup directory in the target application may be accessed by using the access path. Further, the backup service 120 may expose, to the data transmission application 110, an access node corresponding to the generated URI of the first mapping directory, to share the URI of the first mapping directory with the data transmission application 110.

506: The data transmission application 110 reads the data packet in the first backup directory based on the received URI of the first mapping directory and the mapping relationship between an access path in the first mapping directory and an access path in the first backup directory.

For example, after receiving the URI of the first mapping directory shared by the backup service 120, the data transmission application 110 running on the electronic device 100 may obtain, by using a handle carried in the URI, an access path that is in the backup service 120 and that can be used to access the first backup directory correspondingly mapped to the first mapping directory, and then generate a new handle in a process of the data transmission application 110 to access the first backup directory by using the access path. Specifically, the data transmission application 110 may determine, based on the handle obtained from the URI, an access path corresponding to the handle, and then generate a handle that is used to open the first backup directory by using the access path. Finally, the first backup directory is opened based on the generated handle to read the related data.

As shown in FIG. 6, for example, the data transmission application 110 may include a network transmission module 111 and a file operation module 112. The network transmission module 111 may be configured to communicate with a network transmission module of a data transmission application running on an electronic device 200. The file operation module 112 may be configured to perform a read operation, a write operation, or the like on the first mapping directory based on the URI of the first mapping directory shared by the backup service 120.

It may be understood that the related data read by the data transmission application 110 from the first backup directory may be the data packet obtained by packing, by the target application 130, the application data that needs to be backed up in step 502, for example, "files.tar", "distributedfiles.tar", or "database.tar".

507: The data transmission application 110 sends the read data packet to the electronic device 200. For example, the data transmission application 110 may send, through a data transmission channel established between the data transmission application 110 and the data transmission application running on the electronic device 200, the read data packet to the data transmission application running on the electronic device 200.

For example, as shown in FIG. 6, the data transmission application 110 may communicate with the electronic device 200 based on the network transmission module 111. In some other embodiments, a communication manner between the electronic device 100 and the electronic device 200 may alternatively be another manner, for example, may alternatively be a Bluetooth connection. This is not limited herein.

For a specific procedure in which the electronic device 100 establishes a communication connection to the electronic device 200 and establishes the data transmission channel between the data transmission applications, refer to related descriptions in the foregoing step 401. Details are not described herein again.

Based on the data backup procedure in the foregoing steps 501 to 507, a procedure of transmitting, to the data transmission application 110, the application data that needs to be backed up corresponding to the target application 130 may be completed in the electronic device 100 without copying data. This helps reduce power consumption of the electronic device 100 corresponding to data copy processing, helps save storage space of the system of the electronic device 100, and improves efficiency and performance of processing to-be-transmitted data inside the electronic device 100.

Correspondingly, with reference to the corresponding accompanying drawings, the following describes a specific implementation procedure in which a receiving device recovers application data based on a received data packet.

For example, FIG. 8 is a diagram of a data recovery procedure in a data access method according to an embodiment of this application. It may be understood that steps in the procedure shown in FIG. 8 may be performed by a data transmission application 210, a backup service 220, and a target application 230 that are run by an electronic device 200.

As shown in FIG. 8, the procedure includes the following steps.

801: The data transmission application 210 receives a data packet sent by an electronic device 100. For example, the data transmission application 210 run by the electronic device 200 may receive the data packet sent by the connected electronic device 100. The data packet is a data packet obtained by correspondingly packing application data that is of a target application 130 and that is backed up from the electronic device 100. It may be understood that, because a communication connection has been established between the data transmission application 210 run by the electronic device 200 and a data transmission application 110 run by the electronic device 100, and a data transmission channel has been established between the data transmission application 210 and the data transmission application 110, the data packet may be transmitted from the data transmission application 110 to the data transmission application 210 through the data transmission channel.

802: The data transmission application 210 obtains a URI of the second mapping directory shared by the backup service 220.

For example, when preparing an installation environment of the target application 230, the electronic device 200 may run the backup service 220 to create a second mapping directory corresponding to a second backup directory of the target application 230. Further, the backup service 220 may share, with the data transmission application 210, the URI generated based on a handle corresponding to an access path of the second mapping directory, to provide the data transmission application 210 with the access path to the second mapping directory.

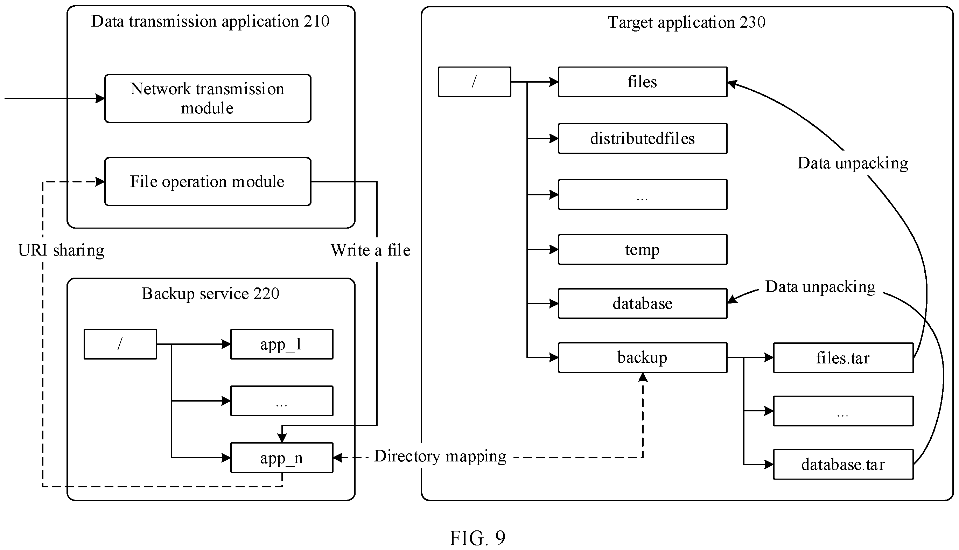

FIG. 9 is a diagram of related operations performed by a data transmission application, a backup service, and a target application that are run by the electronic device 200 in a backup procedure to implement data backup according to an embodiment of this application.

As shown in FIG. 9, when the electronic device 200 serving as a receiving device recovers corresponding application data, an installation environment of a corresponding application needs to be prepared first. For example, in a system of the electronic device 200, a root directory "/" corresponding to the target application 230, directories in which the application data is correspondingly stored, such as "files", "distributedfiles", "database", and the like, and the second backup directory "backup" used to store a data packet of the corresponding application data may be created first. In addition, in corresponding space of the backup service 220 of the system of the electronic device 200, the second mapping directory "app_n" may be further created, and the access path of the directory "app_n" is correspondingly mapped to an access path of the second backup directory "backup" in the target application 230. Further, the backup service 220 may share, with the data transmission application 210 by using the URI, the handle corresponding to the access path corresponding to the second mapping directory "app_n", to provide the data transmission application 210 with the access path in the directory "app_n".

Based on this, after receiving the data packet sent by the data transmission application 110 run by the electronic device 100, the data transmission application 210 run by the electronic device 200 may write the received data packet into the second mapping directory based on the URI of the second mapping directory. For a specific procedure of writing a file into the second mapping directory, refer to related descriptions in the following step 803. Details are not described herein again.

803: The data transmission application 210 obtains, based on the URI of the second mapping directory, an access path corresponding to a write location of each data packet in the second backup directory correspondingly mapped to the second mapping directory.

For example, the data transmission application 210 run by the electronic device 200 may determine, based on a handle carried in the obtained URI of the second mapping directory, an access path that is in the second mapping directory and that corresponds to the handle. The access path is used to open a first backup service in the target application 230. Further, the data transmission application 210 may generate a new handle based on the access path, to write the received data packet into the second backup directory.

As shown in FIG. 9, for example, the data transmission application 210 may include a network transmission module 211 and a file operation module 212. The network transmission module 211 may be configured to perform a procedure of receiving a data packet in step 801. The file operation module 212 may be configured to perform the foregoing step 802 to the following step 804: obtaining, based on the obtained URI of the second mapping directory, the access path corresponding to the second backup directory, accessing the second backup directory, writing a data packet file, and the like. The file written into the second backup directory may be the data packet received by the network transmission module 211.

804: The data transmission application 210 opens the second backup directory based on the obtained access path, and writes the received data packet into the second backup directory.

For example, the backup service 220 and the target application 230 that are run by the electronic device 200 may write, based on the established mapping relationship between an access path in the second mapping directory and an access path in the second backup directory, a corresponding data packet file into the second backup directory correspondingly mapped to the second mapping directory. For a procedure of establishing the mapping relationship between an access path in the second mapping directory and an access path in the second backup directory, refer to FIG. 7 and related descriptions. Details are not described herein again.

As shown in FIG. 9, for example, the file operation module 212 of the data transmission application 210 may obtain an access path in the second mapping directory "app_n" based on the URI corresponding to the second mapping directory "app_n" in the backup service 220. Further, the data transmission application 210 may generate a new handle based on the access path, and use the new handle to open the second backup directory "backup" in the target application 230 based on the mapping relationship between an access path in the second mapping directory "app_n" and an access path in the second backup directory "backup" in the target application 230, and correspondingly write the received data packet.

805: The target application 230 performs data unpacking on the data packet in the second backup directory, and recovers unpacked application data to a corresponding directory.

For example, in a procedure of installing the target application 230 or running the target application 230, the electronic device 200 may read a data packet in the second backup directory in storage space corresponding to the target application 230, and perform data unpacking (unpack).

It may be understood that, the foregoing data packaging (pack) and data unpacking (unpack) are corresponding operations for sending discontinuous data, for example, the foregoing application data, performed by packaging the data into a continuous buffer and unpacking the data from the continuous buffer after the data is received.

As shown in FIG. 9, for example, the target application 230 may perform data unpacking on data packets "files.tar", "distributedfiles.tar", "database.tar", and the like that are mapped and written into the second backup directory "backup". The application data obtained by data unpacking may be stored in the corresponding application data directories "files", "distributedfiles", and "database" in the root directory "/". In this way, when the electronic device 200 installs and runs the target application 230, a procedure of the target application 230 may invoke the application data in these directories when executing a corresponding task.

Based on the data recovery procedure in the foregoing steps 801 to 805, a procedure in which the target application 230 obtains required application data from the data transmission application 110 may also be completed in the electronic device 200 without copying data. The application data that is unpacked and recovered by the target application 230 to corresponding directories may be used for installing or running the target application 230. This helps reduce power consumption of the electronic device 200 corresponding to data copy processing, helps save storage space of the system of the electronic device 200, and improves efficiency and performance of processing to-be-transmitted data inside the electronic device 200.

With reference to the procedures shown in FIG. 4A and FIG. 4B, FIG. 5, and FIG. 8, it may be understood that the data transmission scheme provided in embodiments of this application can effectively reduce power consumption of systems on a data sending device and a data receiving device, a small quantity of internal memory resources of the systems are occupied, and a bandwidth required for data transmission is low. This helps improve data transmission performance of the data sending device and the data receiving device and data transmission efficiency.

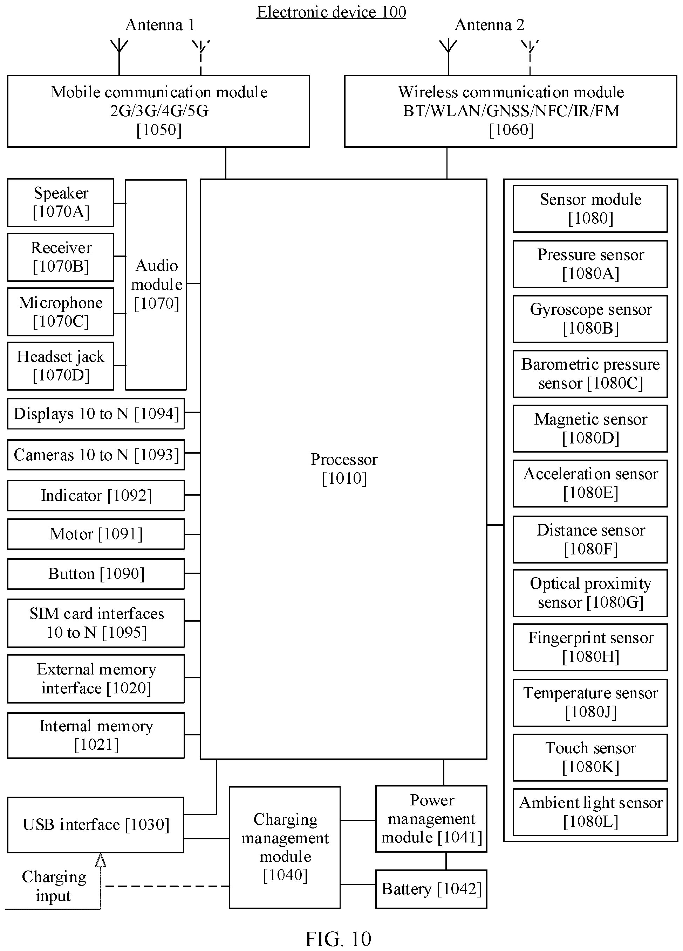

FIG. 10 is a diagram of a hardware structure of an electronic device 100 according to an embodiment of this application. It may be understood that, in this embodiment of this application, an electronic device 200 that interacts with the electronic device 100 to implement the data access method described in the examples in FIG. 4A and FIG. 4B to FIG. 8 may also have a hardware structure the same as or different from that of the electronic device 100. The electronic device 200 may have more or fewer hardware structures than those shown in FIG. 10. This is not limited herein.

The electronic device 100 may include a processor 1010, an external memory interface 1020, an internal memory 1021, a universal serial bus (universal serial bus, USB) interface 1030, a charging management module 1040, a power management module 1041, a battery 1042, an antenna 1, an antenna 2, a mobile communication module 1050, a wireless communication module 1060, an audio module 1070, a speaker 1070A, a receiver 1070B, a microphone 1070C, a headset jack 1070D, a sensor module 1080, a button 1090, a motor 1091, an indicator 1092, a camera 1093, a display 1094, a subscriber identity module (subscriber identity module, SIM) card interface 1095, and the like. The sensor module 1080 may include a pressure sensor 1080A, a gyroscope sensor 1080B, a barometric pressure sensor 1080C, a magnetic sensor 1080D, an acceleration sensor 1080E, a distance sensor 1080F, an optical proximity sensor 1080G, a fingerprint sensor 1080H, a temperature sensor 1080J, a touch sensor 1080K, an ambient light sensor 1080L, a bone conduction sensor 1080M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 1010 may include one or more processing units. For example, the processor 1010 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

In this embodiment of this application, the processor 1010 of the electronic device 100 may control, by using the controller, to implement the steps in the procedure shown in FIG. 5, and the processor of the electronic device 200 may also control, by using the controller, to implement the steps in the procedure shown in FIG. 8, to complete the implementation procedure of the data access method provided in this embodiment of this application.

A memory may be further disposed in the processor 1010, and is configured to store instructions and data. In some embodiments, the memory in the processor 1010 is a cache memory. The memory may store instructions or data just used or cyclically used by the processor 1010. If the processor 1010 needs to use the instructions or the data again, the processor 1010 may directly invoke the instructions or the data from the memory. This avoids repeated access, reduces waiting time of the processor 1010, and improves system efficiency.

In some embodiments, the processor 1010 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 1030 is an interface that conforms to a USB standard specification, and may be specifically a mini USB interface, a micro USB interface, a USB Type-C interface, or the like. The USB interface 1030 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 1040 is configured to receive a charging input from a charger. The charger may be a wireless charger or a wired charger. In some embodiments of wired charging, the charging management module 1040 may receive a charging input of a wired charger through the USB interface 1030. In some embodiments of wireless charging, the charging management module 1040 may receive a wireless charging input through a wireless charging coil of the electronic device 100. When charging the battery 1042, the charging management module 1040 may further supply power to the electronic device by using the power management module 1041. The power management module 1041 is configured to connect to the battery 1042, the charging management module 1040, and the processor 1010. The power management module 1041 receives an input from the battery 1042 and/or the charging management module 1040, to supply power to the processor 1010, the internal memory 1021, the display 1094, the camera 1093, the wireless communication module 1060, and the like. The power management module 1041 may be further configured to monitor parameters such as a battery capacity, a battery cycle count, and a battery health status (electric leakage or impedance). In some other embodiments, the power management module 1041 may alternatively be disposed in the processor 1010. In some other embodiments, the power management module 1041 and the charging management module 1040 may alternatively be disposed in a same device.

A wireless communication function of the electronic device 100 may be implemented by using the antenna 1, the antenna 2, the mobile communication module 1050, the wireless communication module 1060, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 1050 may provide a wireless communication solution that includes 2G/3G/4G/5G or the like and that is applied to the electronic device 100. The wireless communication module 1060 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, in the electronic device 100, the antenna 1 and the mobile communication module 1050 are coupled, and the antenna 2 and the wireless communication module 1060 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 1094, the application processor, and the like. The GPU is a microprocessor for image processing, and is connected to the display 1094 and the application processor. The GPU is configured to perform mathematical and geometric computation for graphic rendering. The processor 1010 may include one or more GPUs that execute program instructions to generate or change displayed information. The display 1094 is configured to display an image, a video, and the like.

The electronic device 100 may implement a photographing function by using the ISP, the camera 1093, the video codec, the GPU, the display 1094, the application processor, and the like. The ISP may be configured to process data fed back by the camera 1093. The camera 1093 is configured to capture a static image or a video.

The external memory interface 1020 may be used to connect to an external memory card, for example, a micro SD card, to extend a storage capability of the electronic device 100. The external memory card communicates with the processor 1010 through the external memory interface 1020, to implement a data storage function. For example, files such as music and videos are stored in the external memory card.

The internal memory 1021 may be configured to store computer executable program code, and the executable program code includes instructions. The internal memory 1021 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 1021 may include a high-speed random access memory, or may include a nonvolatile memory, for example, at least one magnetic disk storage device, a flash memory, or a universal flash storage (universal flash storage, UFS). The processor 1010 runs instructions stored in the internal memory 1021 and/or instructions stored in the memory disposed in the processor, to perform various function applications of the electronic device 100 and data processing.

The electronic device 100 may implement an audio function, for example, music playing or recording, by using the audio module 1070, the speaker 1070A, the receiver 1070B, the microphone 1070C, the headset jack 1070D, the application processor, and the like.

The pressure sensor 1080A is configured to sense a pressure signal, and can convert the pressure signal into an electrical signal. In some embodiments, the pressure sensor 1080A may be disposed on the display 1094. There are a plurality of types of pressure sensors 1080A, such as a resistive pressure sensor, an inductive pressure sensor, and a capacitive pressure sensor. The capacitive pressure sensor may include at least two parallel plates made of conductive materials. When a force is applied to the pressure sensor 1080A, capacitance between electrodes changes. The electronic device 100 determines pressure intensity based on the change of the capacitance. When a touch operation is performed on the display 1094, the electronic device 100 detects intensity of the touch operation by using the pressure sensor 1080A. The electronic device 100 may also calculate a touch location based on a detection signal of the pressure sensor 1080A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 1080B may be configured to determine a moving posture of the electronic device 100. In some embodiments, an angular velocity of the electronic device 100 around three axes (namely, axes x, y, and z) may be determined by using the gyroscope sensor 1080B. The gyroscope sensor 1080B may be configured to implement image stabilization during photographing. For example, when a shutter is pressed, the gyroscope sensor 1080B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 1080B may be further used in a navigation scenario and a somatic game scenario.

The acceleration sensor 1080E may detect accelerations in various directions (usually on three axes) of the electronic device 100. When the electronic device 100 is still, a magnitude and a direction of gravity may be detected. The acceleration sensor 1080E may be further configured to identify a posture of the electronic device, and is used in an application like switching between a landscape mode and a portrait mode or a pedometer.

The distance sensor 1080F is configured to measure a distance. The electronic device 100 may measure the distance in an infrared manner or a laser manner. In some embodiments, in a photographing scenario, the electronic device 100 may measure a distance by using the distance sensor 1080F to implement quick focusing.

The fingerprint sensor 1080H is configured to collect a fingerprint. The electronic device 100 may use a feature of the collected fingerprint to implement fingerprint-based unlocking, application lock access, fingerprint-based photographing, fingerprint-based call answering, and the like. The touch sensor 1080K is also referred to as a "touch device". The touch sensor 1080K may be disposed on the display 1094, and the touch sensor 1080K and the display 1094 constitute a touchscreen that is also referred to as a "touch screen". The touch sensor 1080K is configured to detect a touch operation performed on or near the touch sensor. The touch sensor may transfer the detected touch operation to the application processor to determine a type of the touch event. A visual output related to the touch operation may be provided by using the display 1094. In some other embodiments, the touch sensor 1080K may alternatively be disposed on a surface of the electronic device 100 at a location different from that of the display 1094.

The button 1090 includes a power button, a volume button, and the like. The button 1090 may be a mechanical button, or may be a touch button. The electronic device 100 may receive a button input, and generate a button signal input related to a user setting and function control of the electronic device 100.

The motor 1091 may generate a vibration prompt. The motor 1091 may be configured to provide an incoming call vibration prompt and a touch vibration feedback.

The indicator 1092 may be an indicator light, and may be configured to indicate a charging status and a power change, or may be configured to indicate a message, a missed call, a notification, and the like.

The SIM card interface 1095 is configured to connect to a SIM card. The SIM card may be inserted into the SIM card interface 1095 or removed from the SIM card interface 1095, to implement contact with or separation from the electronic device 100.

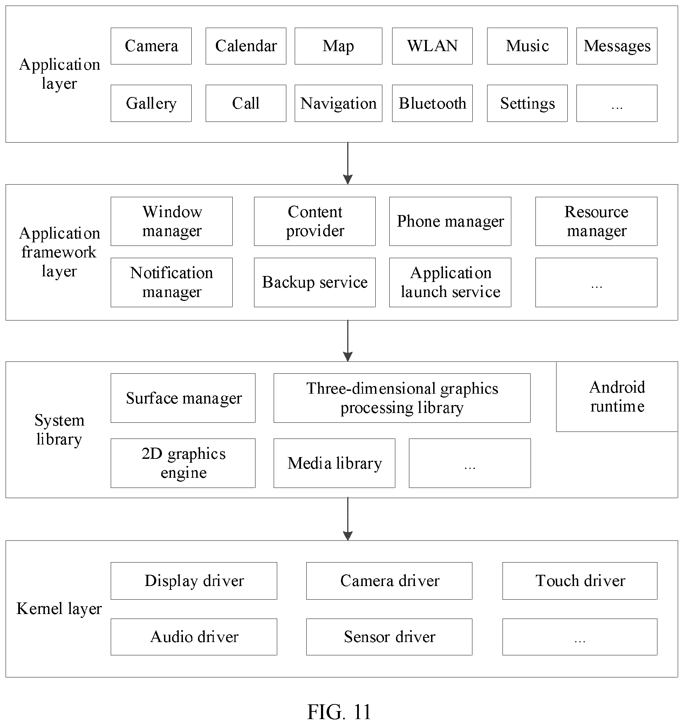

FIG. 11 is a block diagram of a system architecture of an electronic device 100 according to an embodiment of this application. It may be understood that, in this embodiment of this application, an electronic device 200 that interacts with the electronic device 100 to implement the data access method described in the examples in FIG. 4A and FIG. 4B to FIG. 8 may also have a software structure the same as or different from that of the electronic device 100. The electronic device 200 may have more or fewer software structures than those shown in FIG. 10. This is not limited herein. The system architecture of the electronic device 100 may use a layered architecture, an event-driven architecture, a microkernel architecture, a micro service architecture, or a cloud architecture. In embodiments of this application, an Android system with a layered architecture is used as an example to describe the system architecture of the electronic device 100.

It may be understood that, in a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

As shown in FIG. 11, the application layer may include a series of application packages. The application packages may include applications such as Camera, Gallery, Calendar, Call, Map, Navigation, WLAN, Bluetooth, Settings, Music, Messages, and the like.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, a backup service, an application launch service, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture.

The phone manager is configured to provide a communication function of the electronic device 100, for example, management of a call status (including answering, declining, or the like).

The resource manager provides various resources such as a localized string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify a connection success, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is played, the electronic device vibrates, or the indicator light blinks.

The application launch service is used to manage applications installed in a system of the electronic device 100, including a system application and a third-party application. **In** this embodiment of this application, when a target application that needs to be backed up is launched to run, the application launch service may map, through namespace (namespace) management, an application backup directory in a global mount namespace to a first backup directory in a mount namespace of the target application, and map the application backup directory in the global mount namespace to a first mapping directory in a mount namespace of the backup service, so that the first backup directory in the mount namespace of the target application is equivalent to the first mapping directory in the mount namespace of the backup service, thereby implementing dynamic directory mapping and sharing. The dynamic directory mapping procedure may be implemented, for example, by using an algorithm of bind mounts (bind mounts).

The backup service (Recovery) is a backup function of an Android mobile phone, and is a system service capability that can modify data or a system inside an electronic device like a mobile phone that uses an Android^{™} system. In this embodiment of this application, for data that is of a third-party application or another target application and that needs to be backed up or recovered, a data transmission application needs to obtain, by using a global transaction processing capability of the backup service of the system, an access path to a related data access path of the target application, and then accesses the related data access path of the target application, to read or write corresponding data into storage space corresponding to the data transmission application.

The Android runtime includes a kernel library and a virtual machine. The Android runtime is responsible for scheduling and management of the Android system.

The kernel library includes two parts: a performance function that needs to be invoked in a Java language, and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

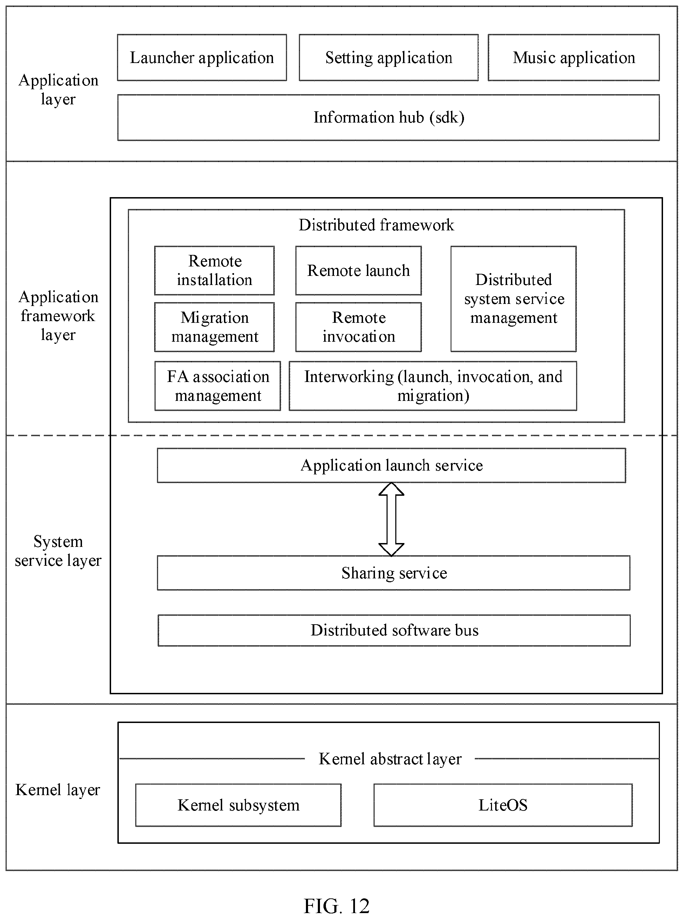

FIG. 12 is a block diagram of a system architecture of another electronic device 100 according to an embodiment of this application. It may be understood that, in this embodiment of this application, an electronic device 200 that interacts with the electronic device 100 to implement the data access method described in the examples in FIG. 4A and FIG. 4B to FIG. 8 may also have a software structure the same as or different from that of the electronic device 100. The electronic device 200 may have more or fewer software structures than those shown in FIG. 10. This is not limited herein.

As shown in FIG. 12, the electronic device 100 uses a distributed system architecture. The distributed system architecture includes an application layer, an application framework layer, a system service layer, and a kernel layer. It may be understood that a distributed operating system shown in FIG. 12 may be, for example, a HarmonyOS (HarmonyOS^{™}).

The application layer may include a series of application packages. The application packages may include applications such as Launcher (Launcher), Settings, Music, and the like, for example, may further include Calendar, WLAN, Bluetooth, Camera, Gallery, Call, Map, and Videos. This is not limited herein.

The application framework layer provides a distributed framework and a lightweight device proxy service for the application layer. The distributed framework includes functional frameworks, such as remote installation, remote launch, migration management, remote invocation, distributed system service management, FA association management, for implementing intra-system and inter-system interworking (including launch, invocation, and migration) and application programming interfaces (application programming interface, API) corresponding to the frameworks.

The system service layer is a core of the distributed operating system. The system service layer provides services for applications and SDKs at the application layer through the application framework layer. The system service layer may include an application launch service, a backup service, a distributed software bus, and the like.

The application launch service is used to manage applications installed in a system of the electronic device 100, including a system application and a third-party application. In this embodiment of this application, when a target application that needs to be backed up is launched to run, the application launch service may map, through namespace (namespace) management, an application backup directory in a global mount namespace to a first backup directory in a mount namespace of the target application, and map an access path corresponding to the application backup directory in the global mount namespace to a first mapping directory in a mount namespace of the backup service, so that an access path corresponding to each data packet in the first backup directory in the mount namespace of the target application is equivalent to an access path in the first mapping directory in the mount namespace of the backup service, thereby implementing dynamic directory mapping. The dynamic directory mapping procedure may be implemented, for example, by using an algorithm of bind mounts (bind mounts).

The backup service (Recovery) is a backup function of an Android mobile phone, and is a system service capability that can modify data or a system inside an electronic device like a mobile phone that uses a distributed operating system. In this embodiment of this application, for data that is of a third-party application or another target application and that needs to be backed up or recovered, a data transmission application needs to obtain, by using a global transaction processing capability of the backup service of the system, an access path to a related data access path of the target application, and then accesses the related data access path of the target application, to read or write corresponding data into storage space corresponding to the data transmission application.

The distributed software bus, as an example structure of an underlying network, is configured to transmit display data and the like flowing between a central control device commonly used by a user and a central control device currently used by the user, that is, to implement Harmony distributed flow (Harmony distributed flow). For an understanding of a function of the distributed software bus, refer to a computer hardware bus. For example, the distributed software bus is an "invisible" bus established among 1+8+N devices (1 is a mobile phone; 8 represents an in-vehicle infotainment, a speaker, a headset, a watch, a wristband, a tablet, a large screen, a personal computer (personal computer, PC), augmented reality (Augmented Reality, AR), and virtual reality (Virtual Reality, VR); and N generally refers to another internet of things (Internet of Things, IOT) device). The distributed software bus has characteristics such as automatic discovery, plug-and-play, ad-hoc networking (heterogeneous network networking), high bandwidth, low latency, high reliability, and the like. That is, by using a distributed software bus technology, the foregoing central control devices can implement sharing of all data therebetween, and further can implement instant interconnection with any device that is in a same local area network as the central control devices or connected to the central control devices through Bluetooth. In addition, the distributed software bus can further share a file between heterogeneous networks such as Bluetooth, wireless fidelity (Wireless Fidelity, Wi-Fi), and the like (for example, on one hand, a file is received through Bluetooth, and on the other hand, the file is transmitted through Wi-Fi).

The kernel layer is a layer between hardware and software. The kernel layer of the distributed operating system includes a kernel subsystem and a drive subsystem. The kernel subsystem may use a multi-kernel design in the distributed operating system. Therefore, the kernel subsystem supports selection of an appropriate OS kernel for different resource constrained devices. For example, in this embodiment of this application, a Lite OS may be selected for a central control device.

A kernel abstract layer (Kernel Abstract Layer, KAL) on the kernel subsystem shields differences among a plurality of kernels and provides basic kernel capabilities for an upper layer, including process/thread management, internal memory management, a file system, network management, and peripheral management.

A drive framework provided by the drive subsystem is a basis of an open hardware ecosystem of the distributed system, and provides a unified peripheral access capability and a driver development and management framework. The kernel layer includes at least a display driver, a camera driver, an audio driver, and a sensor driver.

It may be understood that, in some embodiments of this application, a data access apparatus may be further provided, and is applied to the electronic device 100 or the electronic device 200. The electronic device 100 or the electronic device 200 may include a first application and a second application. The electronic device 100 may be a sending device, and the electronic device 200 may be a receiving device. The first application may be, for example, the foregoing target application, and the second application may be, for example, the foregoing data transmission application.

The data access apparatus may include a backup module, configured to detect an access request of the second application for first storage space of the first application, where the first storage space has a first access path; and configured to: establish, in response to the access request, a second access path that has a mapping relationship with the first access path, and send the second access path to the second application. If the data access apparatus is applied to the electronic device 100, the second application may send first data that is read by accessing the first storage space to the electronic device 200 serving as the receiving device. If the data access apparatus is applied to the electronic device 200, the second application may write, to the accessed first storage space, second data received from the electronic device 100 serving as the sending device.

In this specification, a reference to "one embodiment" or "embodiments" means that a specific feature, structure, or characteristic described with reference to the embodiment is included in at least one example implementation solution or technology disclosed according to embodiments of this application. In this specification, the phrase "in one embodiment" appearing in various places does not necessarily all mean a same embodiment.

The disclosure of embodiments of this application further relates to an apparatus for performing operations in the text. The apparatus may be constructed dedicatedly for the required purpose, or may include a general-purpose computer that is selectively activated or reconfigured by a computer program stored in the computer. Such a computer program may be stored on a computer-readable medium, for example, but not limited to, any type of disk, including a floppy disk, an optical disc, a CD-ROM, a magneto-optical disk, a read-only memory (ROM), a random access memory (RAM), an EPROM, an EEPROM, a magnetic or optical card, an application-specific integrated circuit (ASIC), or any type of medium that is suitable for storing electronic instructions, and each may be coupled to a computer system bus. In addition, the computer mentioned in this specification may include a single processor or may use an architecture involving a plurality of processors for increased computing power.

In addition, the language used in this specification is already mainly selected for readability and instructional purposes and may not be selected to depict or limit the disclosed topics. Therefore, the disclosure of embodiments of this application is intended to describe but not to limit the scope of the concepts discussed in this specification.

## Claims

1. A data access method, applied to a first electronic device, wherein the first electronic device comprises a first application, a second application, and a third application, and the method comprises:
detecting, by the third application, an access request for accessing first storage space of the first application, wherein the first storage space has a first access path;
establishing, by the third application in response to the access request, a second access path that has a mapping relationship with the first access path;
sending, by the third application, the second access path to the second application; and
accessing, by the second application, the first storage space of the first application by using the second access path.

2. The method according to claim 1, wherein the first electronic device is a sending device, the first electronic device establishes, by running the second application, a communication connection to a second electronic device serving as a receiving device, and the method further comprises:
sending, by the second application, first data that is read by accessing the first storage space to the second electronic device.

3. The method according to claim 1, wherein the first electronic device is a receiving device, the first electronic device establishes, by running the second application, a communication connection to a third electronic device serving as a sending device, and the method further comprises:
writing, by the second application, second data that is received from the third electronic device into the accessed first storage space.

4. The method according to any one of claims 1 to 3, wherein application data of the first application and application data of the second application are isolated from each other.

5. The method according to claim 2, wherein the detecting, by the third application, an access request for accessing first storage space of the first application comprises:
detecting, by the third application, an access request that is sent by the second application and that is for accessing the first storage space of the first application, wherein the access request is a request sent by the second application to the third application when the second application detects an operation request of a user for indicating to send the first data of the first application to the second electronic device.

6. The method according to claim 1, wherein the establishing, by the third application in response to the access request, a second access path that has a mapping relationship with the first access path comprises:
creating, by the third application in response to the access request, second storage space having a second access path; and
establishing, by the third application, a correspondence between the second access path and the first access path by using an application launch service provided by the first electronic device, to enable the second access path to point to data that is in the first storage space and that corresponds to the first access path.

7. The method according to claim 6, wherein the sending, by the third application, the second access path to the second application comprises:
sending, by the third application, a first handle corresponding to the second access path to the second application by using a global identifier, wherein the first handle serves as a tool for the third application to access the first storage space by using the second access path, and the first handle corresponds to the second access path; and
obtaining, by the second application, the second access path based on a correspondence between the first handle and the second access path.

8. The method according to claim 7, wherein the accessing, by the second application, the first storage space of the first application by using the second access path comprises:
generating, by the second application, a second handle based on the obtained second access path, wherein the second handle serves as a tool for the second application to access the first storage space by using the second access path; and
invoking, by the second application, the generated second handle to access the first storage space of the first application.

9. The method according to claim 7 or 8, wherein the global identifier comprises a uniform resource locator URI, the URI specifically comprises a file information field, and the file information field is a mapped string corresponding to the first handle.

10. The method according to any one of claims 1 to 9, wherein the first application comprises a system application or a third-party application, the second application comprises a clone application, and the third application comprises a backup service provided by the first electronic device.

11. A data access apparatus, applied to a first electronic device, wherein the first electronic device comprises a first application and a second application, and the apparatus comprises:
a backup module, configured to detect an access request of the second application for first storage space of the first application, wherein the first storage space has a first access path; and configured to: establish, in response to the access request, a second access path that has a mapping relationship with the first access path, and send the second access path to the second application.

12. An electronic device, comprising one or more processors and one or more memories, wherein the one or more memories store one or more programs, and when the one or more programs are executed by the one or more processors, the electronic device is enabled to perform the data access method according to any one of claims 1 to 10.

13. A computer-readable storage medium, wherein the storage medium stores instructions, and when the instructions are executed on a computer, the computer is enabled to perform the data access method according to any one of claims 1 to 10.
